# EUROPÄISCHE PATENTSCHRIFT

(11) **EP 2 776 184 B1**
(45) Veröffentlichungstag und Bekanntmachung des Hinweises auf die Patenterteilung: **31.10.2018**
(21) Anmeldenummer: 12751451.1
(22) Anmeldetag: 10.08.2012
(51) Int. Cl.: B21D 43/05, B65G 25/02

(54) **ANTRIEBSEINRICHTUNG FÜR EINEN MEHRACHSIGEN TRANSPORT VON WERKSTÜCKEN DURCH AUFEINANDER FOLGENDE BEARBEITUNGSSTATIONEN EINER BEARBEITUNGSMASCHINE**
DRIVE DEVICE FOR MULTIAXIAL TRANSPORT OF WORKPIECES THROUGH SUCCESSIVE MACHINING STATIONS OF A MACHINE TOOL
DISPOSITIF D'ENTRAÎNEMENT PERMETTANT UN TRANSPORT SUR PLUSIEURS AXES DE PIÈCES PASSANT PAR LES POSTES D'USINAGE SUCCESSIFS D'UNE MACHINE D'USINAGE

(30) Priorität: 11.11.2011 DE 102011118216
(43) Veröffentlichungstag der Anmeldung: 17.09.2014
(73) Patentinhaber: Schuler Pressen GmbH, 73033 Göppingen (DE)
(72) Erfinder: MÜLLER, Christian, 88512 Mengen-Ennetach (DE); LENDLER, Anton, 88250 Weingarten (DE)
(74) Vertreter: Otten, Roth, Dobler & Partner mbB Patentanwälte
(86) Internationale Anmeldenummer: PCT/EP2012/003428
(87) Internationale Veröffentlichungsnummer: WO 2013/068056

(56) Entgegenhaltungen:
- WO-A1-2005/110641
- DE-A1- 19 645 792
- DE-A1- 19 645 793
- JP-A- 1 166 834
- US-A- 5 105 647

## Beschreibung

Die Erfindung betrifft eine Antriebseinrichtung für einen mehrachsigen Transport von Werkstücken durch aufeinander folgende Bearbeitungsstationen einer Bearbeitungsmaschine gemäß dem Oberbegriff des Anspruchs 1.

Aus der DE 199 14 652 C1 ist ein Antriebssystem für die Schließbewegung eines mehrachsigen Transports von Werkstücken in einer Transferpresse bekannt. Bei diesem Antriebssystem ist der rechten und der linken Greiferschiene ein eigener Antrieb mit Bewegungsübertragungsmitteln zugeordnet, so dass die Greiferschienen unabhängig voneinander horizontal verfahrbar sind. Zum Heben und Senken der Greiferschienen verfügt das Antriebssystem über eine komplexe Hubmechanik, welche sich nahezu über die gesamte Breite des Antriebssystems erstreckt und beide Greiferschienen antreibt. Ebenso werden die beiden Greiferschienen bei einer Längsbewegung in Transportrichtung gemeinsam angetrieben.

Aus der DE 196 45 793 A1 ist eine Transfereinrichtung zum Transport von Werkstücken durch eine Stufenpresse, Transferpressenlinie oder dgl. Pressenanlage mit einer oder zwei parallelen Trag- bzw. Greiferschienen und Greifern zur Aufnahme der Werkstücke bekannt, welche mit Hilfe von vorzugsweise im Bereich der Tragschienen-Mitte kompakt angeordneten Antriebsmodulen eine Transportbewegung in Pressen-Längsrichtung sowie eine Hub- und eine Schließbewegung ausführen, wobei zwischen Tragschiene und Maschinenkörper mehrere längenveränderliche Streben angeordnet sind, die an beiden Enden Lager oder Gelenke besitzen, und die durch aktive Längenänderungen in Verbindung mit passiven Schwenkbewegungen die gewünschte Tragschienenbewegung erzeugen.

Aus der DE 196 45 792 A1 ist eine Transfereinrichtung zum Transport von Werkstücken durch eine Stufenpresse, Transferpressenlinie oder dgl. Pressenanlage mit einer oder zwei parallelen Trag- bzw. Greiferschienen und Greifern zur Aufnahme der Werkstücke, welche mit Hilfe von mehreren, vorzugsweise im Bereich der Tragschienen-Enden angeordneten Antriebsmodulen eine Transportbewegung in Pressenlängsrichtung sowie ggf. eine Hub- und eine Schließbewegung ausführen, wobei zwischen Tragschiene und Maschinenkörper mehrere längenveränderliche Streben angeordnet sind, die an beiden Enden Lager oder Gelenke besitzen, und die durch aktive Längenänderungen in Verbindung mit passiven Schwenkbewegungen die gewünschte Tragschienenbewegung erzeugen.

Aus der US 5,105,647 ist ein Transfersystem zum Umsetzen von Werkstücken zwischen Arbeitsstationen, die linear entlang einer senkrecht zu einer Z-Achse stehenden zentralen X-Achse ausgerichtet sind, bekannt. Es ist zumindest eine Betätigungseinheit vorgesehen, die unabhängig von der Transferschiene unterstützt wird und an einer gradlinig davon abgelegenen Stelle an einer Seite den Bearbeitungsstationen gegenüberliegend angeordnet ist. Jede Betätigungseinheit weist einen lateral sich erstreckenden Arm oder einen Wagen auf, der die Transferschiene unterstützt und dazu ausgelegt ist, der Schiene sowohl eine laterale wie eine Auf- und Abbewegung zu vermitteln. Die laterale Bewegung erfolgt längs der Y-Achse in einer Richtung, die mit der Bewegung der Fingergreifer in Eingriff und außer Eingriff mit den Werkstücken korrespondiert. Die Auf- und Abbewegung erfolgt längs der Z-Achse und korrespondiert mit der Bewegung der Fingergreifer zum Anheben und Absenken der Werkstücke.

Schließlich ist aus der WO 2005/110641 A1 eine Vorrichtung zum schrittweisen Verschieben von Werkstücken, insbesondere innerhalb einer Presse, mit wenigstens einer oder zwei in Vorschubrichtung- für die Vorschub- und Rücklaufbewegung hin- und herbewegbaren, Greiferteile oder Greifbereiche zum Erfassen der Werkstücke aufweisenden Greiferschiene(n) bekannt, wobei an der/den Greiferschiene(n) wenigstens zwei parallel oder spiegelsynchron zueinander in der Bewegungsebene, in einer dazu parallelen Ebene oder in einer dazu schrägen Ebene verschwenkbare Hebel angreifen, wobei die beiden an der Greiferschiene schwenkbar angelenkten Hebel an ihren der Greiferschiene abgewandten Enden oder Bereichen schwenkbar an parallel zu der Erstreckungsrichtung der Greiferschiene aufeinander zu oder voneinander wegbewegbaren Schiebeteilen angreifen und für die Hin- und Herbewegungen der Greiferschiene quer zu ihrer Längserstreckung der Abstand dieser Schiebeteile veränderbar und die Greiferschiene quer zu ihrer Längserstreckungsrichtung zwangsgeführt ist.

Es ist Aufgabe der Erfindung, eine Antriebseinrichtung für einen mehrachsigen Transport von Werkstücken vorzuschlagen, welche kostengünstig und wartungsarm ist.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Bei der erfindungsgemäßen Antriebseinrichtung, sind die Greiferschienen zur Durchführung einer Hubbewegung unabhängig voneinander vertikal verfahrbar und/oder sind die Greiferschienen zur Durchführung einer Transportbewegung unabhängig voneinander longitudinal verfahrbar. Mit einer derartigen Antriebseinrichtung ist es beispielsweise möglich, ein Werkstück bei der Hubbewegung zunächst mit einer Greiferschiene leicht anzuheben, um die Adhäsionskräfte, welche dieses beispielsweise zu einem Pressenunterteil aufweist, mit einem geringeren Kraftaufwand überwinden zu können. Mit einer derartigen Antriebseinrichtung ist es beispielsweise möglich, ein Werkstück bei der Transportbewegung in seiner Lage leicht zu korrigieren, indem eine Greiferschiene gegenüber der anderen Greiferschiene um eine größere Wegstrecke longitudinal in Transportrichtung verfahren wird. Kern der Erfindung ist somit eine Erhöhung der Flexibilität der Antriebseinrichtung, so dass diese bei Bedarf auch für erweiterte Handhabungsaufgaben zu Verfügung steht.

Weiterhin sieht die Erfindung vor, die Antriebeinrichtung mit einem der ersten Greiferschiene zugeordneten ersten Vertikalantrieb und einem der zweiten Greiferschiene zugeordneten zweiten Vertikalantrieb auszustatten, durch welche die Greiferschienen unabhängig voneinander zur Durchführung der Hubbewegung vertikal verfahrbar sind, wobei der erste Vertikalantrieb insbesondere eine erste Parallelogrammführung umfasst und wobei der zweite Vertikalantrieb insbesondere eine zweite Parallelogrammführung umfasst. Durch eine Verwendung von zwei Vertikalantrieben ist eine unabhängige Hubbewegung technisch einfach realisierbar, wobei eine Hubbewegung über eine Parallelogrammführung mit technisch einfachen Mitteln realisierbar ist.

Die Erfindung sieht auch vor, die Antriebseinrichtung mit einem der ersten Greiferschiene zugeordneten ersten Longitudinalantrieb und einem der zweiten Greiferschiene zugeordneten zweiten Longitudinalantrieb auszustatten, durch welche die Greiferschienen unabhängig voneinander zur Durchführung der Transportbewegung longitudinal verfahrbar sind, wobei die Longitudinalantriebe insbesondere jeweils ein erstes Kardangelenk, eine teleskopierbare Keilwelle, ein zweites Kardangelenk und ein Getriebe umfassen. Durch eine Verwendung von derartigen, standardisierten Bauelementen ist eine unabhängige Transportbewegung technisch einfach realisierbar.

Weiterhin sieht die Erfindung vor, dass auch die beiden Transversalantriebe jeweils eine Parallelogrammführung umfassen. Hierdurch sind auch der Transversalantriebe kostengünstig und technische einfach aufgebaut.

Zur Verknüpfung der Vertikalbewegung und der Transversalbewegung ist es vorgesehen, dass der erste Vertikalantrieb den ersten Transversalantrieb und der zweite Vertikalantrieb den zweiten Transversalantrieb trägt oder dass der erste Transversalantrieb den ersten Vertikalantrieb und der zweite Transversalantrieb den zweiten Vertikalantrieb trägt. Hierdurch ist ein kompakter und einfacher Aufbau erreicht, bei welchem gleichartige Komponenten mehrfach Verwendung finden können.

Die Erfindung sieht auch vor, die untere Parallelogrammführung mit einem unteren Lagerarm mit zwei ortsfesten Drehpunkten, einem Verbindungsschenkel mit zwei Gelenkpunkten und zwei parallel verlaufenden Verbindungselementen auszustatten, wobei das erste Verbindungselement an dem Drehpunkt und an dem Gelenkpunkt gelenkig befestigt ist und wobei das zweite Verbindungselement an dem Drehpunkt und an dem Gelenkpunkt gelenkig befestigt ist, ebenso sieht die Erfindung vor, die obere Parallelogrammführung mit einem unteren Lagerarm mit zwei ortsfesten Drehpunkten, einem Verbindungsschenkel mit zwei Gelenkpunkten und zwei parallel verlaufenden Verbindungselementen auszustatten, wobei das erste Verbindungselement an dem Drehpunkt und an dem Gelenkpunkt gelenkig befestigt ist und wobei das zweite Verbindungselement an dem Drehpunkt und an dem Gelenkpunkt gelenkig befestigt ist. Hierdurch ist ebenfalls ein kompakter und einfacher Aufbau erreicht, bei welchem gleichartige Komponenten mehrfach Verwendung finden können.

Weiterhin ist es erfindungsgemäß vorgesehen, den Verbindungsschenkel der unteren Parallelogrammführung als Koppelhebel auszubilden, wobei an dem Koppelhebel die ortsfesten Drehpunkte der oberen Parallelogrammführung ausgebildet sind, wobei ein erster Hebelarm des Koppelhebels den Verbindungsschenkel der unteren Parallelogrammführung bildet, wobei ein zweiter Hebelarm des Koppelhebels den unteren Lagerarm der oberen Parallelogrammführung bildet und wobei insbesondere einer der Gelenkpunkte der unteren Parallelogrammführung und einer der Drehpunkte der oberen Parallelogrammführung auf einer gemeinsamen Drehachse liegen. Durch eine derartige Verknüpfung der unteren Parallelogrammführung und der oberen Parallelogrammführung wird ein besonders kompakter Aufbau der Antriebseinrichtung erreicht.

Die Erfindung sieht auch vor, die Greiferschiene relativ zu einer Greiferschienenführung verfahrbar zu gestalten, wobei der Verbindungsschenkel der oberen Parallelogrammführung insbesondere mit der Greiferschienenführung verbunden ist oder insbesondere durch die Greiferschienenführung gebildet ist. Auch hierdurch wird ein kompakter Aufbau der Antriebseinrichtung erreicht.

Die Erfindung sieht auch vor, die Antriebseinrichtung im Wesentlichen durch eine erste Antriebseinheit und eine zweite Antriebseinheit zu bilden, wobei die erste Antriebseinheit den Transversalantrieb, den Vertikalantrieb und den Longitudinalantrieb der ersten Greiferschiene umfasst und wobei die zweite Antriebseinheit den Transversalantrieb, den Vertikalantrieb und den Longitudinalantrieb der zweiten Greiferschiene umfasst. Hierdurch ist ein symmetrischer, insbesondere spiegelsymmetrischer Aufbau der Antriebseinrichtung gewährleistet, so dass gleiche Bauteil mehrfach Verwendung finden können.

Gemäß der Erfindung ist es vorgesehen, den Transversalantrieb mit einem ersten Motor, welcher insbesondere als Elektromotor ausgebildet ist, auszustatten, wobei dieser Motor insbesondere mit seiner Abtriebswelle die Parallelogrammführung des Transversalantriebs insbesondere in einem ihrer Drehpunkte betätigt und den Vertikalantrieb mit einem zweiten Motor, welcher insbesondere als Elektromotor ausgebildet ist, auszustatten, wobei dieser Motor insbesondere mit seiner Abtriebswelle die Parallelogrammführung des Vertikalantriebs insbesondere in einem ihrer Drehpunkte betätigt. Durch eine derartige direkte Verbindung der Motoren mit den Parallelogrammführungen wird ein kompakter Aufbau gewährleistet.

Weiterhin sieht die Erfindung vor, den Longitudinalantrieb mit einem dritten Motor auszustatten, welcher insbesondere als Elektromotor ausgebildet ist, wobei die Greiferschiene insbesondere relativ zu der Greiferschienenführung von dem dritten Motor in Longitudinalrichtung verfahrbar ist. Hierdurch wird ebenfalls ein kompakter und einfacher Aufbau erreicht.

Erfindungsgemäß ist es ergänzend vorgesehen, den dritten Motor ortsfest mit einem ersten Träger der Antriebseinrichtung zu verbinden, wobei eine Abtriebswelle des ersten Motors über das erste Kardangelenk, die teleskopierbare Keilwelle und das zweite Kardangelenk die Greiferschiene unter Zwischenschaltung des Getriebes antreibt. Durch einen derartigen Aufbau werden die bewegten Massen gering gehalten und sind mit kleiner Motorleistung auf einfache Weise hohe Beschleunigungen realisierbar.

Schließlich sieht die Erfindung vor, die beiden Antriebseinheiten mit den jeweils zugeordneten Greiferschienen zur Vornahme einer Grundeinstellung durch wenigstens einen weiteren Transversalantrieb zueinander in Transversalrichtung zu verfahren. Durch eine derartige Anordnung ist es möglich, den Abstand zwischen den beiden Antriebseinheiten und somit auch zwischen den beiden Greiferschienen zu verstellen, so dass selbst bei vergleichsweise kleiner Dimensionierung des Transversalantriebs große Verstellbereiche in Bezug auf den Abstand der Greiferschienen realisierbar sind.

Im Sinne der Erfindung ist unter einem Motor sowohl ein elektrischer Motor als auch ein hydraulisch oder pneumatisch arbeitender Zylinder zu verstehen.

Weitere Einzelheiten der Erfindung werden in der Zeichnung anhand von schematisch dargestellten Ausführungsbeispielen beschrieben.

Hierbei zeigt:
- Figur 1:: zeigt eine erste Antriebseinheit einer erfindungsgemäßen Antriebseinrichtung in einer ersten Stellung;
- Figur 2:: zeigt die in der Figur 1 gezeigte erste Antriebseinheit in einer zweiten Stellung;
- Figur 3:: zeigt die aus den Figuren 1 und 2 bekannte erste Antriebseinheit zusammen mit einer spiegelsymmetrisch aufgebauten zweiten Antriebseinheit, wobei ergänzend eine Bearbeitungsstation einer Umformpresse gezeigt ist, durch welche ein Werkstück von der Antriebseinrichtung transportiert wird;
- Figur 4:: zeigt in Analogie zur Figur 3 die konstruktive Ausführung der beiden Antriebseinheiten einer erfindungsgemäßen Antriebseinrichtung und
- Figuren 5a - 5c:: zeigen drei Seitenansicht bzw. teilweise geschnittene Seitenansichten der in der Figur 4 gezeigten Antriebseinrichtung.

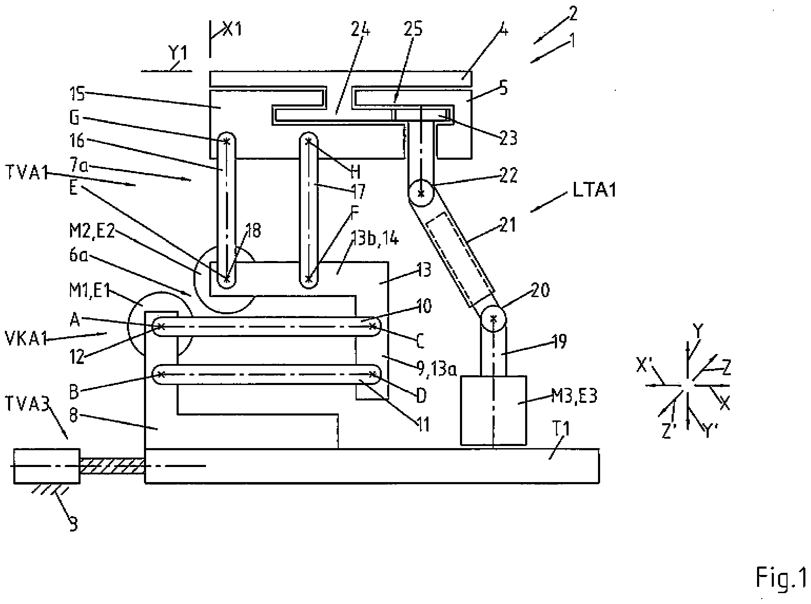

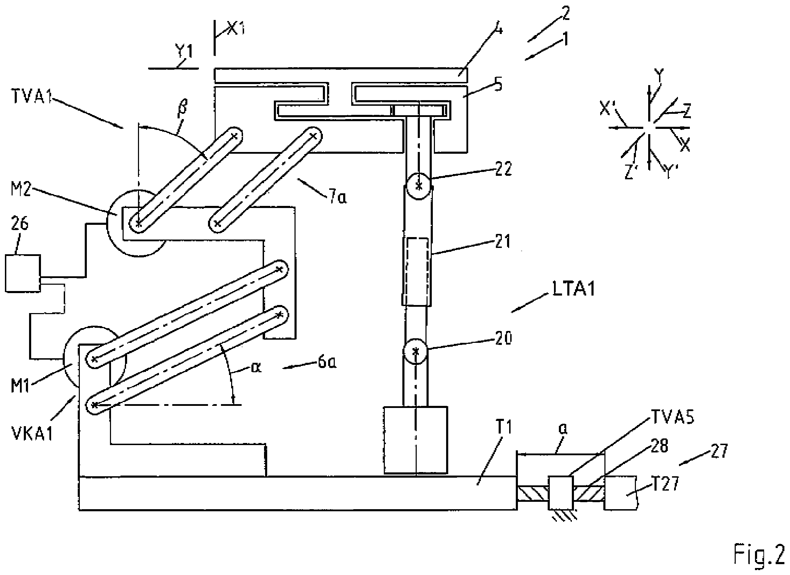

In der Figur 1 ist in schematischer Ansicht eine erste Antriebseinheit 1 einer Antriebseinrichtung 2 gezeigt. Die erste Antriebseinheit 1 umfasst einen ersten Transversalantrieb TVA1, einen ersten Vertikalantrieb VKA1 und einen ersten Longitudinalantrieb LTA1. Diese Antriebe TVA1, VKA1 und LTA1 sind auf einem Träger T1 angeordnet. Die erste Antriebseinheit 1 umfasst weiterhin einen weiteren Transversalantrieb TVA3, welcher mit einem Untergrund 3 fest verbunden ist und durch welchen der Träger T1 auf dem Untergrund 3 in x- bzw. x'-Richtung verfahrbar ist. Die Antriebseinheit 1 umfasst eine erste Greiferschiene 4, welche zum Weitertransport von Werkstücken in Pfeilrichtung z bzw. z' durch den ersten Longitudinalantrieb LTA1 in einer Greiferschienenführung 5 verfahrbar ist. Durch den ersten Transversalantrieb TVA1 ist die Greiferschiene 4 nach rechts bzw. links in die x- bzw. x'-Richtung verfahrbar und durch den Vertikalantrieb VKA1 ist die Greiferschiene 4 nach oben bzw. unten in y- bzw. y'-Richtung verfahrbar. Hierbei umfasst die erste Vertikalführung VKA1 eine erste, untere Parallelogrammführung 6a und die erste Transversalführung TVA1 umfasst eine zweite, obere Parallelogrammführung 7a. Die erste, untere Parallelogrammführung 6a umfasst einen unteren Lagerarm 8 mit zwei ortsfesten Drehpunkten A, B, einen Verbindungsschenkel 9 mit zwei Gelenkpunkten C, D und zwei parallel verlaufenden Verbindungselement 10, 11. Hierbei verbindet das erste Verbindungselement 10 den Drehpunkt A mit dem Gelenkpunkt C und das zweite Verbindungselement 11 den Drehpunkt B mit dem Gelenkpunkt D. Die erste Vertikalführung VKA1 umfasst weiterhin einen Motor M1, welcher an dem Lagerarm 8 angeflanscht ist, als Elektromotor E1 ausgebildet ist und mit seiner Antriebswelle 12 das Verbindungselement 10 um den Drehpunkt A dreht, um die Greiferschiene 4 von einer y-Position Y1 (siehe Figur 1) auf ein y-Position Y2 (siehe Figur 2) anzuheben. Hierzu wird das Verbindungselement 10 aus seiner in der Figur 1 gezeigten horizontalen Stellung um einen Winkel α in eine in der Figur 2 gezeigte Stellung gedreht. Durch die Parallelogrammführung 6a wird der Verbindungsschenkel 9 gehoben, welcher als Koppelhebel 13 ausgebildet ist und einen ersten Hebelarm 13a und einen zweiten Hebelarm 13b umfasst, wobei der erste Hebelarm 13a durch den Verbindungsschenkel 9 gebildet ist und wobei der zweite Hebelarm 13b einen unteren Lagerarm 14 der zweiten, oberen Parallelogrammführung 7a bildet. Durch die einteilige Ausführung des Verbindungsschenkels 9 des ersten Vertikalantriebs VKA1 und des unteren Lagerarms 14 des ersten Transversalantriebs TVA1 wird der Transversalantrieb TVA1 von dem Vertikalantrieb VKA1 angehoben, so dass der zwischen der Greiferschiene 4 und dem Vertikalantrieb VKA1 angeordnete Transversalantrieb TVA1 alle Hebe- und Senkbewegungen des Vertikalantriebs VKA1 mitmacht. Der Transversalantrieb TVA1 umfasst neben dem erwähnten unteren Lagerarm 14, einen Verbindungsschenkel 15 und zwei Verbindungselemente 16, 17, Drehpunkte E, F und Gelenkpunkte G, H. Hierbei verbinden die beiden Verbindungselemente 16, 17 den Lagerarm 14 und den Verbindungsschenkel 15 an den Punkten E und G sowie F und H. Der erste Transversalantrieb TVA1 umfasst weiterhin einen Motor M2, welcher an dem Lagerarm 14 angeflanscht ist, als Elektromotor E2 ausgebildet ist und mit seiner Antriebswelle 18 das Verbindungselement 16 um den Drehpunkt E dreht, um die Greiferschiene 4 von einer x-Position X1 (siehe Figur 1) auf eine x-Position X2 (siehe Figur 2) in die Pfeilrichtung x zu verschieben. Hierzu wird das Verbindungselement 16 aus seiner in der Figur 1 gezeigten vertikalen Stellung um einen Winkel β in eine in der Figur 2 gezeigte Stellung gedreht. Der Verbindungsschenkel 15 wird durch die Greiferschienenführung 5 gebildet. Der erste Longitudinalantrieb LTA1 umfasst einen Motor M3, welcher als Elektromotor E3 ausgebildet ist, und über seine Antriebswelle 19 und ein daran angeschlossenes Kardangelenk 20 eine teleskopierbare Keilwelle 21 antreibt, wobei die teleskopierbare Keilwelle 21 über ein weiteres Kardangelenk 22 ein Ritzel 23 antreibt, welches in der Greiferschienenführung 5 gelagert ist und zusammen mit der als Zahnstange 24 ausgebildeten Greiferschiene 4 eine Getriebe 25 bildet. Durch eine Drehung des an der Zahnstange 24 angreifenden Ritzels 23 ist die Greiferschiene 4 in z- bzw. z'-Richtung verfahrbar. Der Motor M3 ist ortsfest auf dem Träger T1 angeordnet. Die teleskopierbar Keilwelle 21 und die beiden Kardangelenke 20 und 22 ermöglichen es, dass die an der Greiferschiene 4 ausgebildete Zahnstange 24 unabhängig von der x-Position und der y-Position der Greiferschienenführung 5 bzw. der Greiferschiene 4 von dem ersten Longitudinalantrieb LTA1 antriebbar ist. Im Vergleich der Figuren 1 und 2 ist erkennbar wie der erste Longitudinalantrieb LTA1 die Greiferschiene 4 in ihrer Position X1, Y1 und in ihrer Position X2, Y2 antreibt.

Wie bereits erwähnt zeigt die Figur 2 die erste Antriebseinheit 1 der Antriebseinrichtung 2 in der Position X2, Y2 ihrer Greiferschiene 4, welche ausgehend von der in der Figur 1 gezeigten Position X1, Y1 durch eine Hubbewegung des ersten Vertikalantriebs VKA1 und eine Transversalbewegung des ersten Transversalantriebs TVA1 erreicht wurde. Hierbei folgt der erste Longitudinalantrieb LTA1 der vorgegebenen Position passiv, indem die Winkelstellungen der Kardangelenke 20, 22 und die Länge der teleskopierbaren Keilwelle 21 der Stellung der Greiferschienenführung 5 bzw. der Greiferschiene 4 angepasst bzw. nachgeführt werden. Die Antriebseinrichtung 2 umfasst auch eine in der Figur 2 gezeigte elektronische Kontrolleinrichtung 26, welche die Motoren M1 und M2 des ersten Vertikalantriebs VKA1 und des ersten Transversalantriebs TVA1 derart steuert bzw. regelt, dass die gewünschte x-Position und y-Position trotz einer Überlagerung der beiden Antriebe zielgenau und auf kurzem Weg angefahren werden. Abweichend von der Darstellung der Figur 1 ist in der Figur 2 alternativ zu dem dritten Transversalantrieb TVA3, welcher den Träger T1 bewegt, ein fünfter Transversalantrieb TVA5 gezeigt, an welchen sowohl die beschriebene erste Antriebseinheit 1 als auch eine bislang nicht gezeigte, zweite Antriebseinheit 27 angeschlossen ist, von welcher in der Figur 2 nur ein Träger T27 ansatzweise gezeigt ist. Der fünfte Transversalantrieb TVA5 umfasst eine Spindel 28, durch deren Drehung ein Abstand a zwischen der ersten Antriebseinheit 1 und der zweiten Antriebseinheit 27 vergrößerbar oder verkleinerbar ist, wobei die Spindel 28 in den Trägern T1 und T27 in nicht dargestellten Spindelmuttern geführt ist.

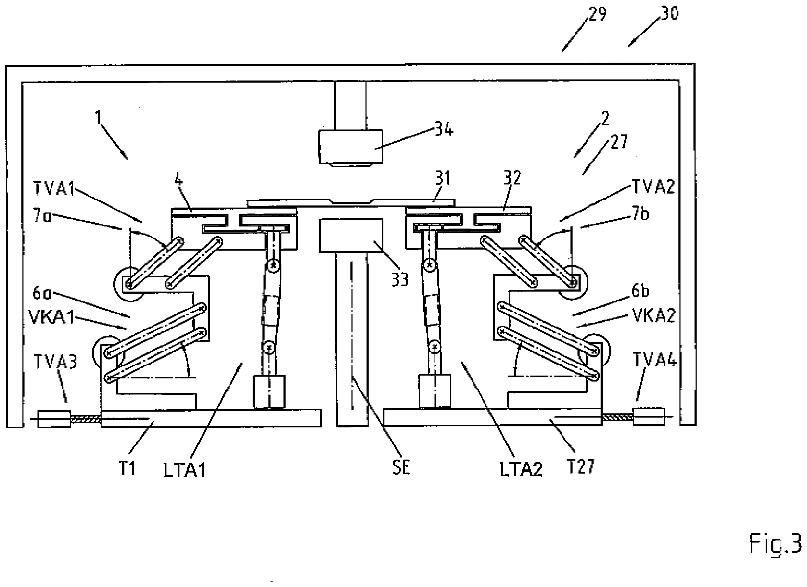

In der Figur 3 ist die erfindungsgemäße Antriebseinrichtung 2 vollständig gezeigt. Diese umfasst im Wesentlichen die in den Figuren 1 und 2 gezeigte erste Antriebseinheit 1 und die in der Figur 2 bereits ansatzweise gezeigte zweite Antriebseinheit 27, wobei die Antriebseinheit 27 in Bezug auf eine senkrecht in die Zeichnungsebene hinein verlaufende Spiegelebene SE im Wesentlichen spiegelsymmetrisch zu der ersten Antriebseinheit 1 ausgebildet ist und einen zweiten Transversalantrieb TVA2, einen zweiten Vertikalantrieb VKA2 und einen zweiten Longitudinalantrieb LTA2 umfasst. Hierbei umfasst der zweite Vertikalantrieb VKA2 eine weitere, untere Parallelogrammführung 6b und der zweite Vertikalantrieb VKA2 eine weitere, obere Parallelogrammführung 7b. Entsprechend der in der Figur 1 gezeigten Ausführungsvariante umfasst die zweite Antriebseinheit 27 einen vierten Transversalantrieb TVA4, welcher mit dem Träger T27 verbunden ist. In der Figur 3 ist ergänzend zu der Antriebseinrichtung 2 mit den Antriebseinheiten 1 und 27 eine Bearbeitungsstation 29 einer mehrstufigen Umformpresse 30 gezeigt, in welcher gerade ein Werkstück 31 von der Antriebseinrichtung 2 mit ihren Greiferschienen 4 und 32 transportiert wird. Die Bearbeitungsstation 29 umfasst ein Unterwerkzeug 33 und ein Oberwerkzeug 34. Hierbei wird das Werkstück 33 in einem der Darstellung nachfolgenden Schritt von der Antriebseinrichtung 2 auf dem Unterwerkzeug 33 abgelegt und in einem weiteren Schritt durch das Oberwerkzeug 34 tiefgezogen.

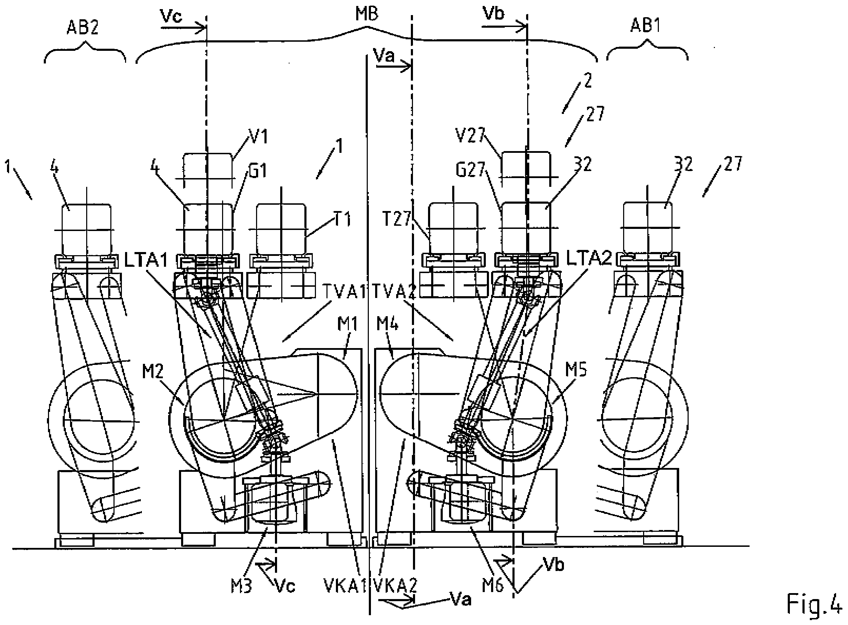

In der Figur 4 ist in Analogie zur Figur 3 die konstruktive Ausführung einer erfindungsgemäßen Antriebseinrichtung 2 mit zwei Antriebseinheiten 1, 27 gezeigt. Hierbei sind die beiden Antriebseinheiten 1, 27 in einem Mittelbereich MB der Figur 4 in einer eng zusammen gefahrenen Stellung dargestellt und in äußeren Bereichen AB1 und AB2 ausschnittsweise in einer weit auseinander gefahrenen Stellung gezeigt. In dem Mittelbereicht MB der Figur 4 sind ein erster und ein zweiter Transversalantrieb TVA1, TVA2, ein erster und ein zweite Vertikalantrieb VKA1, VKA2 und ein erster und ein zweiter Longitudinalantrieb LTA1, LTA2 sowie Motoren M1 bis M6 erkennbar. Weiterhin sind Greiferschienen 4, 32 der beiden Antriebseinheiten 1, 27 exemplarisch in einer Grundstellung G1, G27, einer angehobenen Stellung V1, V27 und einer seitlich verfahrenen Stellung T1, T27 gezeigt.

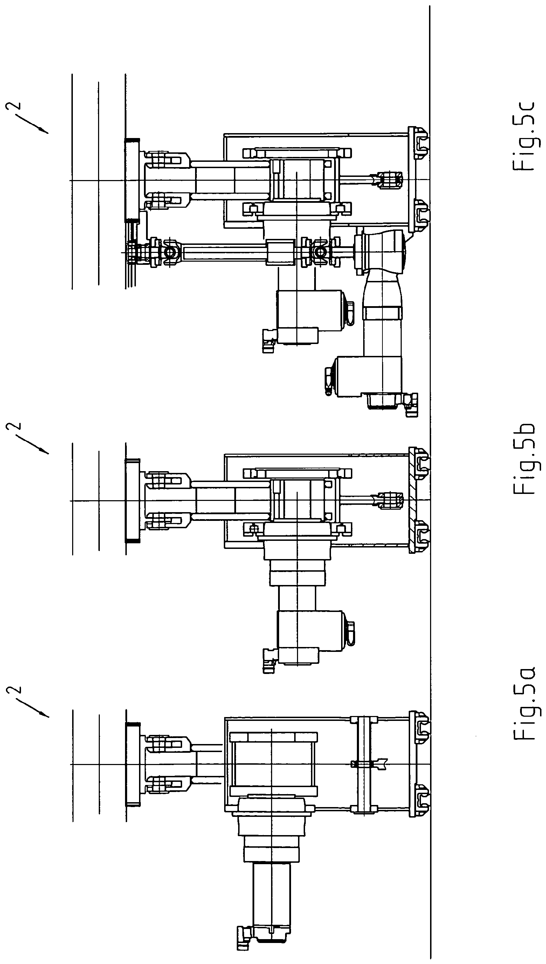

In den Figuren 5a bis 5c sind Seitenansichten bzw. teilweise geschnittene Seitenansichten der in der Figur 4 dargestellten Antriebseinrichtung 2 gezeigt.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugszeichenliste:

- 1: erste Antriebseinheit von 2
- 2: Antriebseinrichtung
- 3: Untergrund
- 4: erste Greiferschiene
- 5: Greiferschienenführung
- 6a: erste, untere Parallelogrammführung
- 6b: weitere, untere Parallelogrammführung
- 7a: weitere, obere Parallelogrammführung
- 7b: weitere, obere Parallelogrammführung
- 8: unterer Lagerarm von 6a
- 9: Verbindungsschenkel von 6a
- 10: Verbindungselement von 6a
- 11: Verbindungselement von 6a
- 12: Antriebswelle von E1
- 13: Koppelhebel
- 13a: erster Hebelarm von 13
- 13b: zweiter Hebelarm von 13
- 14: unterer Lagerarm von 7a
- 15: Verbindungsschenkel von 7a
- 16: Verbindungselement von 7a
- 17: Verbindungselement von 7a
- 18: Antriebswelle von E2
- 19: Antriebswelle von LTA1
- 20: Kardangelenk von HZA 1
- 21: teleskopierbare Keilwelle von LTA1
- 22: Kardangelenk von LTA1
- 23: Ritzel von LTA1
- 24: Zahnstange
- 25: Getriebe aus 23 und 24
- 26: elektronische Kontrolleinheit
- 27: zweite Antriebseinheit von 2
- 28: Spindel von TVA5
- 29: Bearbeitungsstation
- 30: mehrstufige Umformpresse
- 31: Werkstück
- 32: zweite Greiferschiene
- 33: Unterwerkzeug
- 34: Oberwerkzeug

- A, B: Drehpunkt von 6a
- C, D: Gelenkpunkt von 6a
- E, F: Drehpunkt von 7a
- G, H: Gelenkpunkt von 7a
- a: Abstand zwischen T1 und T27
- E1 - E3: Elektromotor
- G1, G27: Grundstellung G1, G27 von 4 bzw. 32
- LTA1: erster Longitudinalantrieb
- LTA2: zweiter Longitudinalantrieb
- M1: Motor von VKA1
- M2: Motor von TVA1
- M3: Motor von LTA1
- M4: Motor von VKA2
- M5: Motor von TVA2
- M6: Motor von LTA2
- MB: Mittelbereich von Figur 4
- AB1, AB2: äußerer Bereicht von Figur 4
- SE: Spiegelebene
- T1: Träger von 1
- T27: Träger von 27
- TVA1: erster Transversalantrieb
- TVA2: zweiter Transversalantrieb
- TVA3: dritter Transversalantrieb
- TVA4: vierter Transversalantrieb
- TVA5: fünfter Transversalantrieb
- T1, T27: seitlich verfahrene Stellung von 4 bzw. 32
- VKA1: erster Vertikalantrieb
- VKA2: zweiter Vertikalantrieb
- V1, V27: angehobene Stellung von 4 bzw. 32
- X1, X2: x-Position
- x, x': Richtung
- Y1, Y2: y-Position
- y, y': Richtung
- z, z': Richtung
- α, β: Winkel

## Patentansprüche

1. Antriebseinrichtung (2) für einen mehrachsigen Transport von Werkstücken (31) durch aufeinander folgende Bearbeitungsstationen (29) einer Bearbeitungsmaschine, insbesondere einer mehrstufigen Umformpresse (30), wobei die Antriebseinrichtung (2) zwei Greiferschienen (4, 32) umfasst, wobei die beiden Greiferschienen (4, 32) durch einen der ersten Greiferschiene (4) zugeordneten ersten Transversalantrieb (TVA1) und einen der zweiten Greiferschiene (32) zugeordneten zweiten Transversalantrieb (TVA2) unabhängig voneinander zur Durchführung einer Schließbewegung transversal verfahrbar sind, wobei die Greiferschienen (4, 32) zur Durchführung einer Hubbewegung unabhängig voneinander vertikal verfahrbar sind und/oder dass die Greiferschienen (4, 32) zur Durchführung einer Transportbewegung unabhängig voneinander longitudinal verfahrbar sind, wobei die Antriebseinrichtung (2) einen der ersten Greiferschiene (4) zugeordneten ersten Vertikalantrieb (VKA1) und einen der zweiten Greiferschiene (32) zugeordneten zweiten Vertikalantrieb (VKA2) umfasst, durch welche die Greiferschienen (4, 32) unabhängig voneinander zur Durchführung der Hubbewegung vertikal verfahrbar sind, dass die Antriebeinrichtung (2) einen der ersten Greiferschiene (4) zugeordneten ersten Longitudinalantrieb (LTA1) und einen der zweiten Greiferschiene (32) zugeordneten zweiten Longitudinalantrieb (LTA2) umfasst, durch welche die Greiferschienen (4, 32) unabhängig voneinander zur Durchführung der Transportbewegung longitudinal verfahrbar sind, wobei die Longitudinalantriebe (LTA1, LTA2) jeweils ein erstes Kardangelenk (20), eine teleskopierbare Keilwelle (21), ein zweites Kardangelenk (22) und ein Getriebe (25) umfassen, **dadurch gekennzeichnet, dass** der erste Vertikalantrieb (VKA1) eine erste Parallelogrammführung (6a) umfasst und dass der zweite Vertikalantrieb (VKA2) eine weitere Parallelogrammführung (6b) umfasst und dass der erste Transversalantrieb (TVA1) eine Parallelogrammführung (7a) umfasst und dass der zweite Transversalantrieb (TVA2) eine Parallelogrammführung (7b) umfasst.

2. Antriebseinrichtung nach Anspruch 1, **dadurch gekennzeichnet,**
- **dass** der erste Vertikalantrieb (VKA1) den ersten Transversalantrieb (TVA1) und der zweite Vertikalantrieb (VKA2) den zweiten Transversalantrieb (TVA2) trägt oder
- **dass** der erste Transversalantrieb (TVA1) den ersten Vertikalantrieb (VKA1) und der zweite Transversalantrieb (TVA2) den zweiten (VKA2) Vertikalantrieb trägt.

3. Antriebseinrichtung nach einem der vorhergehenden Ansprüche, **dadurch gekennzeichnet,**
- **dass** eine untere Parallelogrammführung (6a) einen unteren Lagerarm (8) mit zwei ortsfesten Drehpunkten (A, B), einen Verbindungsschenkel (9) mit zwei Gelenkpunkten (C, D) und zwei parallel verlaufende Verbindungselemente (10, 11) umfasst,
- wobei das erste Verbindungselement (10) an dem Drehpunkt (A) und an dem Gelenkpunkt (C) gelenkig befestigt ist und
- wobei das zweite Verbindungselement (11) an dem Drehpunkt (B) und an dem Gelenkpunkt (D) gelenkig befestigt ist
- **dass** eine obere Parallelogrammführung (7a) einen unteren Lagerarm (14) mit zwei ortsfesten Drehpunkten (E, F), einen Verbindungsschenkel (15) mit zwei Gelenkpunkten (G, H) und zwei parallel verlaufende Verbindungselemente (16, 17) umfasst,
- wobei das erste Verbindungselement (16) an dem Drehpunkt (E) und an dem Gelenkpunkt (G) gelenkig befestigt ist und
- wobei das zweite Verbindungselement (17) an dem Drehpunkt (F) und an dem Gelenkpunkt (H) gelenkig befestigt ist.

4. Antriebseinrichtung nach Anspruch 3, **dadurch gekennzeichnet,**
- **dass** der Verbindungsschenkel (9) der unteren Parallelogrammführung (6a) als Koppelhebel (13) ausgebildet ist,
- wobei an dem Koppelhebel (13) die ortsfesten Drehpunkte (E, F) der oberen Parallelogrammführung (7a) ausgebildet sind,
- wobei ein erster Hebelarm (13a) des Koppelhebels (13) den Verbindungsschenkel (9) der unteren Parallelogrammführung (6a) bildet,
- wobei ein zweiter Hebelarm (13b) des Koppelhebels (13) den unteren Lagerarm (14) der oberen Parallelogrammführung (7a) bildet und
- wobei insbesondere einer der Gelenkpunkte (C, D) der unteren Parallelogrammführung (6a) und einer der Drehpunkte (E, F) der oberen Parallelogrammführung (7a) auf einer gemeinsamen Drehachse liegen.

5. Antriebseinrichtung nach einem der vorhergehenden Ansprüche, **dadurch gekennzeichnet, dass** die Greiferschiene (4, 32) relativ zu einer Greiferschienenführung (5) verfahrbar ist, wobei der Verbindungsschenkel (15) der oberen Parallelogrammführung (7a) insbesondere mit der Greiferschienenführung (5) verbunden ist oder insbesondere durch die Greiferschienenführung (5) gebildet ist.

6. Antriebseinrichtung nach einem der vorhergehenden Ansprüche, **dadurch gekennzeichnet,**
- **dass** eine erste Antriebseinheit (1) den Transversalantrieb (TVA1), den Vertikalantrieb (VKA1) und den Longitudinalantrieb (LTA1) der ersten Greiferschiene (4) umfasst und
- **dass** eine zweite Antriebseinheit (27) den Transversalantrieb (TVA2), den Vertikalantrieb (VKA2) und den Longitudinalantrieb (LTA2) der zweiten Greiferschiene (32) umfasst.

7. Antriebseinrichtung nach einem der vorhergehenden Ansprüche, **dadurch gekennzeichnet,**
- **dass** der Transversalantrieb (TVA1, TVA2) einen Motor (M2, M5), insbesondere Elektromotor (E2) umfasst, welcher insbesondere mit seiner Abtriebswelle (18) die Parallelogrammführung (7a) des Transversalantriebs (TVA1, TVA2) insbesondere in einem ihrer Drehpunkte (E, F) betätigt und
- **dass** der Vertikalantrieb (VKA1, VKA2) einen ersten Motor (M1, M4), insbesondere Elektromotor (E1) umfasst, welcher insbesondere mit seiner Abtriebswelle (12) die Parallelogrammführung (6a) des Vertikalantriebs (VKA1, VKA2) insbesondere in einem ihrer Drehpunkte (A, B) betätigt.

8. Antriebseinrichtung nach Anspruch 5, **dadurch gekennzeichnet,**
- **dass** der Longitudinalantrieb (LTA1) einen dritten Motor (M3), insbesondere Elektromotor (E3) umfasst,
- wobei die Greiferschiene (4) insbesondere relativ zu der Greiferschienenführung (5) von dem dritten Motor (M3) in Longitudinalrichtung (z, z') verfahrbar ist.

9. Antriebseinrichtung nach Anspruch 8, **dadurch gekennzeichnet, dass** der dritte Motor (M3) ortsfest mit einem ersten Träger (T1) der Antriebseinrichtung (2)) verbunden ist, wobei eine Abtriebswelle (19) des ersten Motors (M1) über das erste Kardangelenk (20), die teleskopierbare Keilwelle (21) und das zweite Kardangelenk (22) die Greiferschiene (4) unter Zwischenschaltung des Getriebes (25) antreibt.

10. Antriebseinrichtung nach Anspruch 6, **dadurch gekennzeichnet, dass** die beiden Antriebseinheiten (1, 27) mit den jeweils zugeordneten Greiferschienen (4, 32) zur Vornahme einer Grundeinstellung durch wenigstens einen weiteren Transversalantrieb (TVA3, TVA4, TVA5) zueinander in Transversalrichtung (x, x') verfahrbar sind.

## Claims

1. Drive device (2) for multiaxial transport of workpieces (31) through successive machining stations (29) of a machine tool, in particular of a multistage forming press (30), wherein the drive device (2) comprises two gripper rails (4, 32), wherein the two gripper rails (4, 32) are transversely displaceable independently of each other by a first transverse drive (TVA1) assigned to the first gripper rail (4) and a second transverse drive (TVA2) assigned to the second gripper rail (32) for the execution of a closing movement, wherein the gripper rails (4, 32) are vertically displaceable independently of each other for the execution of a lifting movement, and/or in that the gripper rails (4, 32) are longitudinally displaceable independently of each other for the execution of a transport movement, wherein the drive device (2) comprises a first vertical drive (VKA1), assigned to the first gripper rail (4), and a second vertical drive (VKA2), assigned to the second gripper rail (32), by which the gripper rails (4, 32) are vertically displaceable independently of each other for the execution of the lifting movement, in that the drive device (2) comprises a first longitudinal drive (LVA1), assigned to the first gripper rail (4), and a second longitudinal drive (LVA2), assigned to the second gripper rail (32), by which the gripper rails (4, 32) are longitudinally displaceable independently of each other for the execution of the transport movement, wherein the longitudinal drives (LVA1, LVA2) comprise respectively a first universal joint (20), a telescopic splined shaft (21), a second universal joint (22) and a gear mechanism (25), **characterized in that** the first vertical drive (VKA1) comprises a first parallelogram guide (6a) and **in that** the second vertical drive (VKA2) comprises a further parallelogram guide (6b) and **in that** the first transverse drive (TVA1) comprises a parallelogram guide (7a) and **in that** the second transverse drive (TVA2) comprises a parallelogram guide (7b).

2. Drive device according to Claim 1, **characterized**
- **in that** the first vertical drive (VKA1) bears the first transverse drive (TVA1) and the second vertical drive (VKA2) bears the second transverse drive (TVA2), or
- **in that** the first transverse drive (TVA1) bears the first vertical drive (VKA1) and the second transverse drive (TVA2) bears the second (VKA2) vertical drive.

3. Drive device according to one of the preceding claims, **characterized**
- **in that** the lower parallelogram guide (6a) comprises a lower bearing arm (8) having two fixed pivot points (A, B), a connecting branch (9) having two hinge points (C, D), and two parallel running connecting elements (10, 11),
- wherein the first connecting element (10) is articulately fastened to the pivot point (A) and to the hinge point (C) and
- wherein the second connecting element (11) is articulately fastened to the pivot point (B) and to the hinge point (D),
- **in that** the upper parallelogram guide (7a) comprises a lower bearing arm (14) having two fixed pivot points (E, F), a connecting branch (15) having two hinge points (G, H), and two parallel running connecting elements (16, 17),
- wherein the first connecting element (16) is articulately fastened to the pivot point (E) and to the hinge point (G) and
- wherein the second connecting element (17) is articulately fastened to the pivot point (F) and to the hinge point (H).

4. Drive device according to Claim 3, **characterized**
- **in that** the connecting branch (9) of the lower parallelogram guide (6a) is configured as a coupling lever (13),
- wherein the fixed pivot points (E, F) of the upper parallelogram guide (7a) are configured on the coupling lever (13),
- wherein a first lever arm (13a) of the coupling lever forms the connecting branch (9) of the lower parallelogram guide (6a),
- wherein a second lever arm (13b) of the coupling lever (13) forms the lower bearing arm (14) of the upper parallelogram guide (7a), and
- wherein, in particular, one of the hinge points (C, D) of the lower parallelogram guide (6a) and one of the pivot points (E, F) of the upper parallelogram guide (7a) lie on a common rotational axis.

5. Drive device according to one of the preceding claims, **characterized in that** the gripper rail (4, 32) is displaceable relative to a gripper rail guide (5), wherein the connecting branch (15) of the upper parallelogram guide (7a) is connected, in particular, to the gripper rail guide (5) or is formed, in particular, by the gripper rail guide (5) .

6. Drive device according to one of the preceding claims, **characterized**
- **in that** a first drive unit (1) comprises the transverse drive (TVA1), the vertical drive (VKA1) and the longitudinal drive (LTA1) of the first gripper rail (4), and
- **in that** a second drive unit (27) comprises the transverse drive (TVA2), the vertical drive (VKA2) and the longitudinal drive (LTA2) of the second gripper rail (32).

7. Drive device according to one of the preceding claims, **characterized**
- **in that** the transverse drive (TVA1, TVA2) comprises a motor (M2, M5), in particular an electric motor (E2), which, in particular with its output shaft (18), actuates the parallelogram guide (7a) of the transverse drive (TVA1, TVA2), in particular in one of its pivot points (E, F), and
- **in that** the vertical drive (VKA1, VKA2) comprises a first motor (M1, M4), in particular an electric motor (E1), which, in particular with its output shaft (12), actuates the parallelogram guide (6a) of the vertical drive (VKA1, VKA2), in particular in one of its pivot points (A, B).

8. Drive device according to Claim 5, **characterized**
- **in that** the longitudinal drive (LTA1) comprises a third motor (M3), in particular an electric motor (E3),
- wherein the gripper rail (4) is displaceable, in particular relative to the gripper rail guide (5), by the third motor (M3) in the longitudinal direction (z, z').

9. Drive device according to Claim 8, **characterized in that** the third motor (M3) is fixedly connected to a first beam (T1) of the drive device (2), wherein an output shaft (19) of the first motor (M1) drives via the first universal joint (20) the telescopic splined shaft (21), and via the second universal joint (22) the gripper rail (4), with the interposition of the gear mechanism (25).

10. Drive device according to Claim 6, **characterized in that** the two drive units (1, 27) with the respectively assigned gripper rails (4, 32) are displaceable relative to each other in the transverse direction (x, x'), by at least one further transverse drive (TVA3, TVA4, TVA5), for the conductance of a basic adjustment.

## Revendications

1. Dispositif d'entraînement (2) pour un transport à plusieurs axes de pièces (31) passant par différents postes d'usinage successifs (29) d'une machine d'usinage, en particulier d'une presse de formage à plusieurs étages (30), dans lequel le dispositif d'entraînement (2) comprend deux rails à griffes (4, 32), dans lequel les deux rails à griffes (4, 32) sont déplaçables transversalement indépendamment l'un de l'autre par un premier entraînement transversal (TVA1) associé au premier rail à griffes (4) et par un deuxième entraînement transversal (TVA2) associé au deuxième rail à griffes (32) pour exécuter un mouvement de fermeture, dans lequel les rails à griffes (4, 32) sont déplaçables verticalement indépendamment l'un de l'autre pour exécuter un mouvement de levage et/ou en ce que les rails à griffes (4, 32) sont déplaçables longitudinalement indépendamment l'un de l'autre pour exécuter un mouvement de transport, dans lequel le dispositif d'entraînement (2) comprend un premier entraînement vertical (VKA1) associé au premier rail à griffes (4) et un deuxième entraînement vertical (VKA2) associé au deuxième rail à griffes (32), par lesquels les rails à griffes (4, 32) sont déplaçables verticalement indépendamment l'un de l'autre pour exécuter le mouvement de levage, en ce que le dispositif d'entraînement (2) comprend un premier entraînement longitudinal (LTA1) associé au premier rail à griffes (4) et un deuxième entraînement longitudinal (LTA2) associé au deuxième rail à griffes (32), par lesquels les rails à griffes (4, 32) sont déplaçables longitudinalement indépendamment l'un de l'autre pour exécuter le mouvement de transport, dans lequel les entraînements longitudinaux (LTA1, LTA2) comprennent respectivement une première articulation à cardan (20), un arbre cannelé télescopique (21), une deuxième articulation à cardan (22) et une transmission (25), **caractérisé en ce que** le premier entraînement vertical (VKA1) comprend un premier guide à parallélogramme (6a) et **en ce que** le deuxième entraînement vertical (VKA2) comprend un deuxième guide à parallélogramme (6b) et **en ce que** le premier entraînement transversal (TVA1) comprend un guide à parallélogramme (7a) et **en ce que** le deuxième entraînement transversal (TVA2) comprend un guide à parallélogramme (7b).

2. Dispositif d'entraînement selon la revendication 1, **caractérisé en ce que**
- le premier entraînement vertical (VKA1) porte le premier entraînement transversal (TVA1) et le deuxième entraînement vertical (VKA2) porte le deuxième entraînement transversal (TVA2) ou
- le premier entraînement transversal (TVA1) porte le premier entraînement vertical (VKA1) et le deuxième entraînement transversal (TVA2) porte le deuxième (VKA2) entraînement vertical.

3. Dispositif d'entraînement selon l'une quelconque des revendications précédentes, **caractérisé en ce que**
- un guide à parallélogramme inférieur (6a) comprend un bras d'appui inférieur (8) avec deux points de rotation fixes (A, B), une branche de liaison (9) avec deux points d'articulation (C, D) et deux éléments de liaison agencés parallèlement (10, 11),
- dans lequel le premier élément de liaison (10) est fixé de façon articulée au point de rotation (A) et au point d'articulation (C) et
- dans lequel le deuxième élément de liaison (11) est fixé de façon articulée au point de rotation (B) et au point d'articulation (D),
- un guide à parallélogramme supérieur (7a) comprend un bras d'appui inférieur (14) avec deux points de rotation fixes (E, F), une branche de liaison (15) avec deux points d'articulation (G, H) et deux éléments de liaison (16, 17) agencés parallèlement,
- dans lequel le premier élément de liaison (16) est fixé de façon articulée au point de rotation (E) et au point d'articulation (G) et
- dans lequel le deuxième élément de liaison (17) est fixé de façon articulée au point de rotation (F) et au point d'articulation (H).

4. Dispositif d'entraînement selon la revendication 3, **caractérisé en ce que**
- la branche de liaison (9) du guide à parallélogramme inférieur (6a) est réalisée sous forme de levier de couplage (13),
- dans lequel les points de rotation fixes (E, F) du guide à parallélogramme supérieur (7a) sont formés sur le levier de couplage (13),
- dans lequel un premier bras de levier (13a) du levier de couplage (13) forme la branche de liaison (9) du guide à parallélogramme inférieur (6a),
- dans lequel un deuxième bras de levier (13b) du levier de couplage (13) forme le bras d'appui inférieur (14) du guide à parallélogramme supérieur (7a) et
- dans lequel en particulier un des points d'articulation (C, D) du guide à parallélogramme inférieur (6a) et un des points de rotation (E, F) du guide à parallélogramme supérieur (7a) sont situés sur un axe de rotation commun.

5. Dispositif d'entraînement selon l'une quelconque des revendications précédentes, **caractérisé en ce que** le rail à griffes (4, 32) est déplaçable par rapport à un guide de rail à griffes (5), dans lequel la branche de liaison (15) du guide à parallélogramme supérieur (7a) est reliée en particulier au guide de rail à griffes (5) et en particulier est formée par le guide de rail à griffes (5).

6. Dispositif d'entraînement selon l'une quelconque des revendications précédentes, **caractérisé en ce que**
- une première unité d'entraînement (1) comprend l'entraînement transversal (TVA1), l'entraînement vertical (VKA1) et l'entraînement longitudinal (LTA1) du premier rail à griffes (4) et
- une deuxième unité d'entraînement (27) comprend l'entraînement transversal (TVA2), l'entraînement vertical (VKA2) et l'entraînement longitudinal (LTA2) du deuxième rail à griffes (32).

7. Dispositif d'entraînement selon l'une quelconque des revendications précédentes, **caractérisé en ce que**
- l'entraînement transversal (TVA1, TVA2) comprend un moteur (M2, M5), en particulier un moteur électrique (E2), qui actionne en particulier avec son arbre de sortie (18) le guide à parallélogramme (7a) de l'entraînement transversal (TVA1, TVA2) en particulier à un de ses points de rotation (E, F), et
- l'entraînement vertical (VKA1, VKA2) comprend un premier moteur (M1, M4), en particulier un moteur électrique (E1), qui actionne en particulier avec son arbre de sortie (12) le guide à parallélogramme (6a) de l'entraînement vertical (VKA1, VKA2) en particulier à un de ses points de rotation (A, B).

8. Dispositif d'entraînement selon la revendication 5, **caractérisé en ce que**
- l'entraînement longitudinal (LTA1) comprend un troisième moteur (M3), en particulier un moteur électrique (E3),
- dans lequel le rail à griffes (4) est déplaçable en direction longitudinale (z, z') en particulier par rapport au guide de rail à griffes (5) par le troisième moteur (M3).

9. Dispositif d'entraînement selon la revendication 8, **caractérisé en ce que** le troisième moteur (M3) est assemblé de façon fixe à un premier support (T1) du dispositif d'entraînement (2), dans lequel un arbre de sortie (19) du premier moteur (M1) entraîne par l'intermédiaire de la première articulation à cardan (20), de l'arbre cannelé télescopique (21) et de la deuxième articulation à cardan (22) le rail à griffes (4) avec interposition de la transmission (25).

10. Dispositif d'entraînement selon la revendication 6, **caractérisé en ce que** les deux unités d'entraînement (1, 27) avec les rails à griffes respectivement associés (4, 32) sont déplaçables l'une vers l'autre en direction transversale (x, x') par au moins un autre entraînement transversal (TVA3, TVA4, TVA5) pour occuper un réglage de base.
